(19) Europäisches Patentamt

European Patent Office

Office européen des brevets

(11) EP 1 617 672 A1

(12) EUROPEAN PATENT APPLICATION

(43) Date of publication:
18.01.2006 Bulletin 2006/03

(51) Int Cl.:
H04N 7/26 (2006.01)

(21) Application number: 04016437.8

(22) Date of filing: 13.07.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: MATSUSHITA ELECTRIC INDUSTRIAL
CO., LTD.
Kadoma-shi, Osaka 571-8501 (JP)

(72) Inventors:
• Wedi, Thomas
64823 Gross-Umstadt (DE)
• Wittmann, Steffen
64546 Mörfelden-Walldorf (DE)

(74) Representative: Grünecker, Kinkeldey,
Stockmair & Schwanhäusser
Anwaltssozietät
Maximilianstrasse 58
80538 München (DE)

(54) **Motion estimator/compensator including a 16-bit 1/8 pel interpolation filter**

(57) The present invention provides an improved motion estimation by only employing a simplified hardware configuration and less computational effort. This is achieved by particular filter coefficients and additional downshift operations when calculating a 1/4 sub-pixel resolution image. Accordingly, a more efficient encoding and decoding with a more simple configuration can be achieved.

Fig. 4

EP 1 617 672 A1

**Description**

The present invention relates to an improved motion estimation and compensation. In particular, the present invention relates to an efficient 16-bit implementation of a 1/8-pel interpolation filter for use in motion estimation and compensation.

Motion pictures are being adopted in an increasingly number of applications ranging from video telephony and video conferencing to DVD and digital television. When motion pictures are being transmitted, a substantial amount of data has to be sent through conventional transmission channels of a limited available frequency bandwidth. In order to transmit the digital data through the limited channel bandwidth, it is inevitable to compress or reduce the volume of the transmission data.

In order to enable inter-operability between systems designed by different manufactures of any given application, video-coding standards have been developed for compressing the amount of video data. The coding approach underlying most of these standards consist of the following main stages:

(1) Dividing each video frame into blocks of pixels such that a processing of the video frame can be conducted at a block level.

(2) Reducing spatial redundancies within a video frame by subjecting video data of a block to a transformation, quantization and entropy coding.

(3) Exploiting temporal dependencies between blocks of subsequent frames in order to only transmit changes between subsequent frames.

Temporal dependencies between blocks of subsequent frames are determined by employing a motion estimation and compensation technique. For any given block, a search is performed in previously coded and transmitted frames to determine a motion vector, which will be used by the encoder and decoder to predict the image data of a block.

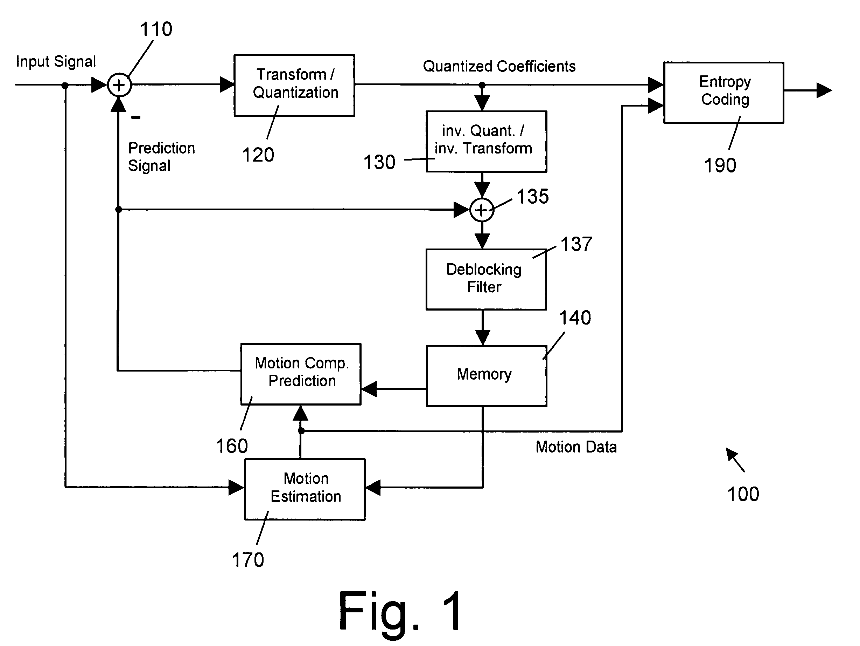

An example of a video encoder configuration is illustrated in Fig. 1. The shown video encoder generally denoted with reference numeral 100 comprises a transform unit 120 to transform spatial image data to the frequency domain, a quantization unit 120 to quantize the transform coefficients provided by the transform unit, a variable length coder 190 for entropy encoding the quantized transform coefficients and a video buffer (not shown) for adapting the compressed video data having a variable bit rate to a transmission channel which may have a fixed bit rate.

The encoder shown in Fig. 1 employs a DPCM (Differential Pulse Code Modulation) by only transmitting differences between subsequent fields or frames. These differences are obtained in subtractor 110, which receives the video data to be encoded and subtracts the previous image therefrom. The previous image is obtained by decoding the previously encoded image ("currently decoded image"). This is accomplished by a decoder, which is incorporated into video encoder 100. The decoder performs the encoding steps in a reverse manner, i.e. the decoder comprises an inverse quantizer 130, an inverse transform unit 130 and an adder 135 for adding the decoded changes to the previously decoded image in order to produce the image as it will be obtained on the decoding side.

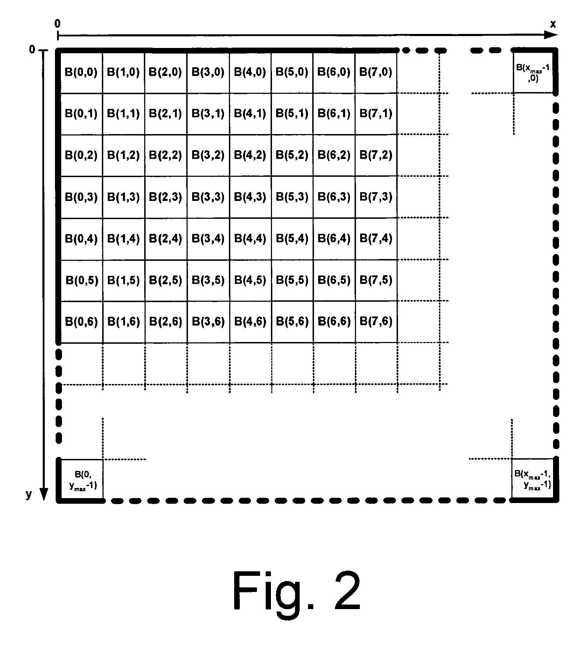

In motion compensated DPCM, a current frame or field is predicted from image data of a previous frame or field based on an estimation of the motion between the current and the previous images. Such estimated motion may be described in terms of 2-dimensional motion vectors representing the displacement of pixels between the previous and the current images. Usually, motion estimation is performed on a block-by-block basis. An example of the division of the current image into plurality of blocks is illustrated in Fig. 2.

During motion estimation, a block of a current frame is compared with blocks in previous frames until a best match is determined. Based on the comparison results, an inter-frame displacement vector for the whole block can be estimated for the current frame. For this purpose, a motion estimator 170 is incorporated into the encoder together with the corresponding motion compensator 160 included into the decoding path.

The video encoder of Fig. 1 is operated as follows. A given video image of a video signal is divided into a number of small blocks, usually denoted as "macro blocks". For example, video image shown in Fig. 2 is divided into a plurality of macro blocks, each of which usually having a size of 16x16 pixels.

When encoding the video data of an image by only reducing spatial redundancies within the image, the resulting frame is referred to as an I-picture. I-pictures are typically encoded by directly applying the transform to the macro blocks of a frame. Encoded I-pictures are large in size as no temporal information is exploited to reduce the amount of data.

In order to take advantage of temporal redundancies that exist between successive images, a prediction encoding between subsequent fields or frames is performed based on motion estimation and compensation. When a selected reference frame in motion estimation is a previously encoded frame, the frame to be encoded is referred to as a P-picture. In case both, a previously encoded frame and a future frame are chosen as reference frames, the frame to be encoded is referred to as B-picture.

Although the motion compensation has been described to be based on a 16x16 macro block, motion estimation and compensation can be performed using a number of different blocks sizes. Individual motion vectors may be determined for blocks having 4x4, 4x8, 8x4, 8x8, 8x16, 16x8, or 16x16 pixels. The provision of small motion compensation blocks improves the ability to handle fine motion details.

Based on the results of the motion estimation operation, the motion compensation operation provides a prediction based on the determined motion vector. The information contained in a prediction error block resulting from the predicted block is then transformed into transform coefficients in transform unit 120. Generally, a 2-dimensional DCT (Discrete Cosine Transform) is employed. The resulting transform coefficients are quantized and finally entropy encoded (VLC) in entropy encoding unit 190.

The transmitted stream of compressed video data is received by a decoder, which reproduces a sequence of encoded video images based on the received data. The decoder configuration corresponds to that of the decoder included in the encoder shown in Fig. 1. A detailed description of a decoder configuration is therefore omitted.

In order to improve the accuracy of motion compensation, a sub-pixel accuracy of reference frames is widely used. By employing a 1/8 sub-pixels motion vector accuracy, the coding efficiency can be significantly improved over a 1/2 or 1/4 sub-pixel resolution.

In order to further increase the motion vector accuracy and coding efficiency, a 1/3 and 1/6 sub-pixel vector accuracy have been proposed in EP-A-1 073 276.

The motion vector accuracy and coding efficiency can further be increased by applying interpolation filters in motion estimation and compensation yielding 1/8 sub-pixel displacements. However, such a sub-pixel resolution requires high computation complexity, in particular, calculation registers having a length of up to 25 bits.

Such a complex implementation may be based on a 2-step approach. A first step calculates a 1/4 sub-pixel image employing an 8-tap filter. A second stage calculates a 1/8 sub-pixel from the 1/4 sub-pixel image by employing a bilinear filtering.

The filtering operation for generating the image with the 1/4 sub-pixel accuracy comprises the steps of horizontal and subsequent vertical filtering. The horizontal interpolation may be performed based on the following equations:

$$h_1 = -3 \cdot A_4 + 12 \cdot B_4 - 37 \cdot C_4 + 229 \cdot D_4 + 71 \cdot E_4 - 21 \cdot F_4 + 6 \cdot G_4 - 1 \cdot H_4$$

$$h_2 = -3 \cdot A_4 + 12 \cdot B_4 - 39 \cdot C_4 + 158 \cdot D_4 + 158 \cdot E_4 - 39 \cdot F_4 + 12 \cdot G_4 - 3 \cdot H_4$$

$$h_3 = -1 \cdot A_4 + 6 \cdot B_4 - 21 \cdot C_4 + 71 \cdot D_4 + 229 \cdot E_4 - 37 \cdot F_4 + 12 \cdot G_4 - 3 \cdot H_4$$

In the above equations, $h_{1-3}$ denote the 1/4 sub-pixel values and $A_x$-$H_x$ represent the original full-pel pixel values, i.e. the pixels from the original image.

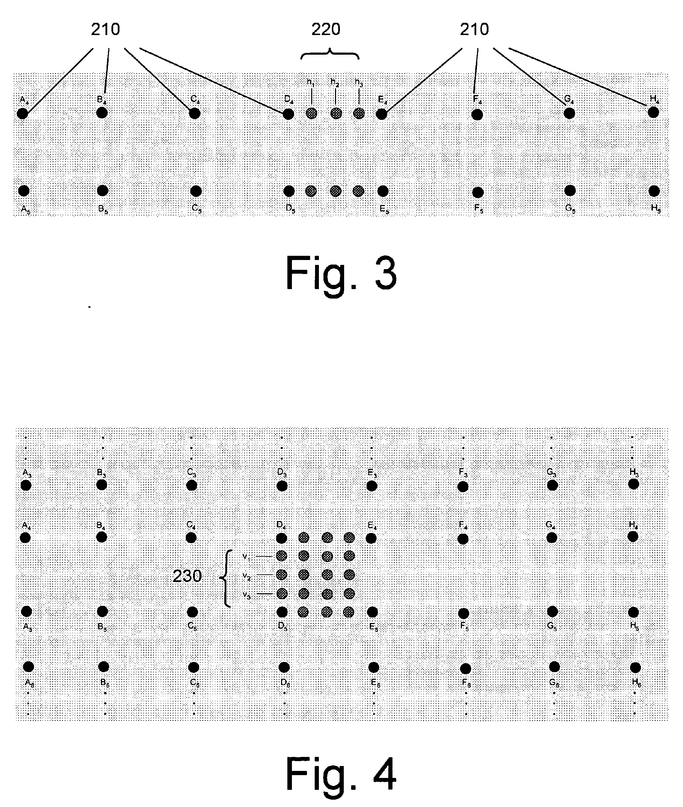

The horizontal filtering is illustrated in Fig. 3. An 8-tap filtering is performed based on original pixel values 210 and three intermediate pixel values 220 are calculated in order to obtain a 1/4 sub-pixel accuracy in horizontal direction.

After the horizontal filtering has been completed, the resulting image data having a full-pel pixel accuracy in vertical direction and 1/4 sub-pixel accuracy in horizontal direction are subjected to vertical filtering. For this purpose, preferably equations having coefficients which correspond to those of the above described horizontal filter are employed.

$$v_1 = -3 \cdot D_1 + 12 \cdot D_2 - 37 \cdot D_3 + 229 \cdot D_4 + 71 \cdot D_5 - 21 \cdot D_6 + 6 \cdot D_7 - 1 \cdot D_8$$

$$v_2 = -3 \cdot D_1 + 12 \cdot D_2 - 39 \cdot D_3 + 158 \cdot D_4 + 158 \cdot D_5 - 39 \cdot D_6 + 12 \cdot D_7 - 3 \cdot D_8$$

$$v_3 = -1 \cdot D_1 + 6 \cdot D_2 - 21 \cdot D_3 + 71 \cdot D_4 + 229 \cdot D_5 - 37 \cdot D_6 + 12 \cdot D_7 - 3 \cdot D_8$$

In the above equations, $v_{1-3}$ refer to the calculated vertical 1/4 sub-pixel values and $D_1, D_2, D_3, D_4, D_5, D_6, D_7$ and $D_8$ represent the full-pel resolution pixels, i.e. the original pixels 210 and the intermediate pixels 220 obtained during horizontal filtering.

The resulting pixel values have a length of up to 25 bits. In order to obtain image data wherein each of the pixel values fall into a predefined range of allowable pixel values, the calculation results are downshifted and rounded as illustrated, by the example, for pixel value $v_1$:

$$v_1' = \left(v_1 + \frac{256^2}{2}\right) >> 16 ,$$

$v_1$ represents the pixel value resulting from the horizontal and vertical filtering, while $v'_1$ represents the downshifted pixel value. The downshifted pixel values are further clipped to a range of 0 to 255.

The vertical filtering is illustrated in Fig. 4. The pixel values 230 obtained during vertical filtering complete the sub-pixel array illustrated by way of example between original pixels $D_4$, $D_5$, $E_4$ and $E_5$. Corresponding pixel values are calculated for the entire image although not shown in the drawings.

After having the 1/4 sub-pixel image completed, a 1/8 sub-pixel frame is calculated by applying a bilinear filtering to the 1/4 sub-pixel resolution. In this manner, intermediate pixels are generated between each of the 1/4 resolution pixels.

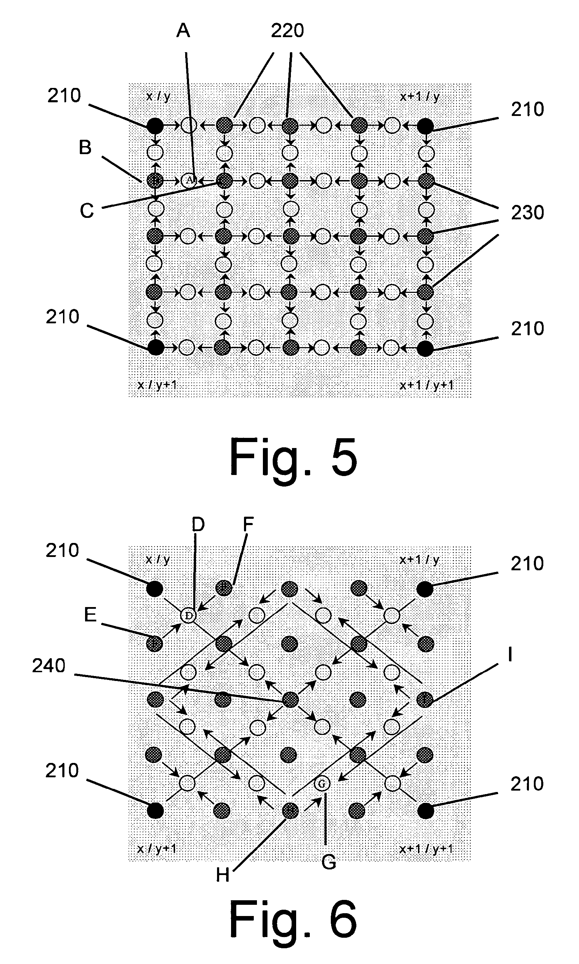

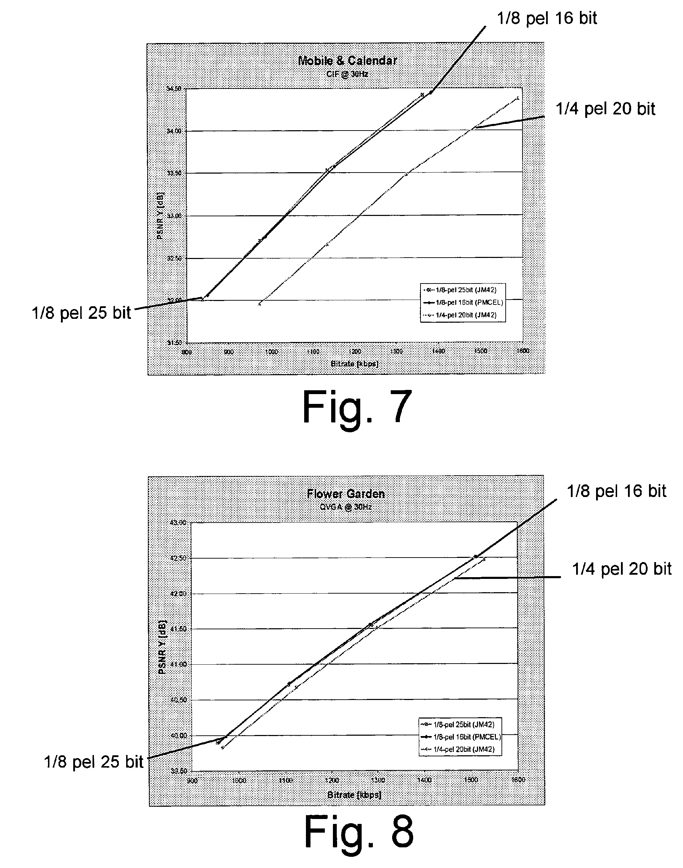

A bilinear filtering is applied in two steps and is illustrated by way of example in Fig. 5 and Fig. 6. Starting from the 1/4 sub-pixel resolution, Fig. 5 illustrates the application of a horizontal and vertical filtering. For this purpose, a mean value is calculated from the respective neighbouring pixel values in order to obtain an intermediate pixel value of a 1/8 sub-pixel resolution. When employing a binary representation for this processing, the following equation can be applied:

$$A = (B + C + 1) >> 1$$

The remaining 1/8 sub-pixel values to be interpolated are calculated by diagonal filtering as illustrated in Fig. 6. It is a particular advantage of this approach that for the bilinear filtering sub-pixel values stemming from multiple filtering are avoided as far as possible. For this purpose, only those interpolated pixels are taken into account which are preferably directly derived from original pixel values 210, i.e. the interpolated pixel value located between original pixel values 210.

All intermediate pixel values can be calculated therefrom, i.e. from the original pixel values 210 and the intermediate pixel values derived from the original pixel values, when additionally taking centre pixel 240 of the sub-pixel array into account. The calculation operation for the additional 1/8 sub-pixel values is based on two of the 1/4 sub-pixel resolution values, respectively. The individual pixel values taken into account for the calculation of an intermediate pixel value are illustrated in Fig. 6 by respective arrows. Depending on the distance of the pixels to be taken into account for interpolation, the following two equations can be employed:

$$D = (E + F + 1) >> 1$$

$$G = (3H + I + 2) >> 2$$

$D$ and $G$ represent new intermediate values as illustrated in Fig. 6 and $E$, $F$, $H$ and $I$ represent the pixel values from the 1/4 resolution image. The additional values of "1" and "2" in the above equations only serve for correctly rounding the calculation result.

It is a particular disadvantage of such an interpolation approach that long registers are needed which result in high hardware complexity and computational effort.

In view of this drawback, the present invention aims to provide a motion estimation and compensation method requiring a lower computational effort and lower hardware complexity.

This is achieved by the features of the independent claims.

According to a first aspect of the present invention, a method for estimating or compensating motion between images of a sequence of video images is provided. The method includes a step of interpolating pixel values. The interpolation first calculates intermediate pixel values of a 1/4 pixel resolution and subsequently, bilinear filters the pixel values of the 1/4 pixel resolution for determining additional pixel values in-between to obtain pixel values of a 1/8 pixel resolution. The calculation of intermediate pixel values of the 1/4 pixel resolution includes a first filtering step in a first direction for calculating intermediate pixel values based on pixel values of a current image in accordance with the following equations:

$$h_1 = -1 \cdot A_h + 3 \cdot B_h - 10 \cdot C_h + 59 \cdot D_h + 18 \cdot E_h - 6 \cdot F_h + 1 \cdot G_h - 0 \cdot H_h,$$

$$h_2 = -1 \cdot A_h + 4 \cdot B_h - 10 \cdot C_h + 39 \cdot D_h + 39 \cdot E_h - 10 \cdot F_h + 4 \cdot G_h - 1 \cdot H_h,$$

$$h_3 = -0 \cdot A_h + 1 \cdot B_h - 6 \cdot C_h + 18 \cdot D_h + 59 \cdot E_h - 10 \cdot F_h + 3 \cdot G_h - 1 \cdot H_h$$

wherein $A_h$, $B_h$, $C_h$, $D_h$, $E_h$, $F_h$, $G_H$ and $H_h$ represent neighboring pixel values of the current image in the first direction of pixels and $h_1$, $h_2$, and $h_3$ represent the intermediate pixel values calculated between two of the neighbouring pixel values of the current image. The binary representations of the calculated intermediate pixel values are downshifted in a first shifting step by 6 bits. A second filtering step calculates intermediate pixel values based on pixel values obtained from the first filtering step and the first shifting step in accordance with the following equations:

$$v_1 = -1 \cdot D_{v-3} + 3 \cdot D_{v-2} - 10 \cdot D_{v-1} + 59 \cdot D_v + 18 \cdot D_{v+1} - 6 \cdot D_{v+2} + 1 \cdot D_{v+3} - 0 \cdot D_{v+4},$$

$$v_2 = -1 \cdot D_{v-3} + 4 \cdot D_{v-2} - 10 \cdot D_{v-1} + 39 \cdot D_v + 39 \cdot D_{v+1} - 10 \cdot D_{v+2} + 4 \cdot D_{v+3} - 1 \cdot D_{v+4},$$

$$v_3 = -0 \cdot D_{v-3} + 1 \cdot D_{v-2} - 6 \cdot D_{v-1} + 18 \cdot D_v + 59 \cdot D_{v+1} - 10 \cdot D_{v+2} + 3 \cdot D_{v+3} - 1 \cdot D_{v+4}$$

wherein $D_{v-3}$, $D_{v-2}$, $D_{v-1}$, $D_v$, $D_{v+1}$, $D_{v+2}$, $D_{v+3}$ and $D_{v+4}$ represent neighboring pixel values in the second direction of pixels and $v_1$, $v_2$, and $v_3$ represent the intermediate pixel values calculated between two of the neighbouring pixel values. The binary representations of the intermediate pixel values calculated in the second filtering step are downshifted in a second shifting step by 6 bits.

According to a further aspect of the present invention, a motion estimator or compensator for estimating or compensating motion between images of a sequence video images is provided. The motion estimator includes a pixel interpolator for interpolating pixel values in a video image. The pixel interpolator includes a calculator for calculating intermediate pixel values of a 1/4 pixel resolution and a bilinear filter for filtering the pixel values of the 1/4 picture resolution for determining additional pixel values in-between to obtain pixel values of a 1/8 pixel resolution. The calculator for the 1/4 picture resolution includes a first filter, a first shifting unit, a second filter and a second shifting unit. The first filter calculates intermediate pixel values based on pixel values of a current image in a first direction in accordance with the following equations:

$$h_1 = -1 \cdot A_h + 3 \cdot B_h - 10 \cdot C_h + 59 \cdot D_h + 18 \cdot E_h - 6 \cdot F_h + 1 \cdot G_h - 0 \cdot H_h,$$

$$h_2 = -1 \cdot A_h + 4 \cdot B_h - 10 \cdot C_h + 39 \cdot D_h + 39 \cdot E_h - 10 \cdot F_h + 4 \cdot G_h - 1 \cdot H_h,$$

$$h_3 = -0 \cdot A_h + 1 \cdot B_h - 6 \cdot C_h + 18 \cdot D_h + 59 \cdot E_h - 10 \cdot F_h + 3 \cdot G_h - 1 \cdot H_h$$

wherein $A_h$, $B_h$, $C_h$, $D_h$, $E_h$, $F_h$, $G_h$ and $H_h$ represent neighboring pixel values of the current image in the first direction of pixels and $h_1$, $h_2$, and $h_3$ represent the intermediate pixel values calculated between two of the neighbouring pixel values of the current image. The first shifting unit downshifts the binary representation of the pixel values from the first filter by 6 bits. The second filter calculates intermediate pixel values based on pixel values obtained from the first filter and the first shifting means in a second direction in accordance with the following equations:

$$v_1 = -1 \cdot D_{v-3} + 3 \cdot D_{v-2} - 10 \cdot D_{v-1} + 59 \cdot D_v + 18 \cdot D_{v+1} - 6 \cdot D_{v+2} + 1 \cdot D_{v+3} - 0 \cdot D_{v+4,}$$

$$v_2 = -1 \cdot D_{v-3} + 4 \cdot D_{v-2} - 10 \cdot D_{v-1} + 39 \cdot D_v + 39 \cdot D_{v+1} - 10 \cdot D_{v+2} + 4 \cdot D_{v+3} - 1 \cdot D_{v+4,}$$

$$v_3 = -0 \cdot D_{v-3} + 1 \cdot D_{v-2} - 6 \cdot D_{v-1} + 18 \cdot D_v + 59 \cdot D_{v+1} - 10 \cdot D_{v+2} + 3 \cdot D_{v+3} - 1 \cdot D_{v+4}$$

wherein $D_{v-3}$, $D_{v-2}$, $D_{v-1}$, $D_v$, $D_{v+1}$, $D_{v+2}$, $D_{v+3}$ and $D_{v+4}$ represent neighboring pixel values in the second direction of pixels and $v_1$, $v_2$, and $v_3$ represent the intermediate pixel values calculated between two of said neighbouring pixel values. The second shifting unit downshifts the binary representation of intermediate pixel values from the second filter by six bits.

It is the particular approach of the present invention to provide a 1/8 pixel resolution by only employing 16-bit register means. By selecting appropriate coefficients for the horizontal and vertical filtering for the 1/4 sub-pixel calculation and applying a 6-bit downshift in-between, a 1/8 sub-pixel accuracy can be achieved without complex computation. During the interpolation processing, all intermediate calculations do not require a register exceeding a 16-bit accuracy. Consequently, motion estimation and compensation can be improved by employing an increased pixel accuracy without increasing the computational effort accordingly.

Based on the improved motion estimation and compensation, the encoding and decoding efficiency of images can be improved in a corresponding manner without increasing the hardware and computational complexity accordingly.

Preferred embodiments of the present invention are the subject matter of the dependent claims.

Other embodiments and advantages of the present invention will become more apparent from the following description of the preferred embodiment in which:

Fig. 1    illustrates in block diagram for the configuration of a video encoder;

Fig. 2    illustrates the division of a video image into a plurality of blocks,

Fig. 3    illustrates the horizontal filtering for obtaining a 1/4 sub-pixel accuracy in horizontal direction,

Fig. 4    illustrates a vertical filtering for obtaining a 1/4 sub-pixel accuracy in vertical direction,

Fig. 5    illustrates a horizontal and vertical bilinear filtering for obtaining a 1/8 sub-pixel accuracy,

Fig. 6    illustrates a bilinear filtering in diagonal direction for obtaining a 1/8 subpixel accuracy,

Fig. 7    illustrates the coding results of the present invention compared to conventional approaches for a first example image, and

Fig. 8    illustrates the coding results of the present invention compared to conventional approaches for a second example image.

In video encoding, the coding efficiency is increased by applying motion estimation and motion compensation in predictive coding. The estimation and compensation of motion can be improved by reducing the difference remaining between the image data to be encoded and the predictive image data. In particular, a 1/8 sub-pixel motion vector accuracy can further improve the coding efficiency.

The present invention achieves an accordingly improved motion estimation and compensation without increasing the hardware complexity and the computational effort accordingly, as the present invention enables to only employ a 16-bit accuracy of intermediate calculation results for this purpose.

A two-step procedure is employed for obtaining the 1/8 pixel accuracy. In a first stage, a horizontal and vertical filtering is subsequently employed. For interpolating 1/4 sub-pixel values in horizontal direction, the following equations are applied:

$$h_1 = -1 \cdot A_h + 3 \cdot B_h - 10 \cdot C_h + 59 \cdot D_h + 18 \cdot E_h - 6 \cdot F_h + 1 \cdot G_h - 0 \cdot H_h,$$

$$h_2 = -1 \cdot A_h + 4 \cdot B_h - 10 \cdot C_h + 39 \cdot D_h + 39 \cdot E_h - 10 \cdot F_h + 4 \cdot G_h - 1 \cdot H_h,$$

$$h_3 = -0 \cdot A_h + 1 \cdot B_h - 6 \cdot C_h + 18 \cdot D_h + 59 \cdot E_h - 10 \cdot F_h + 3 \cdot G_h - 1 \cdot H_h$$

In the above equations, $h_{1-3}$ represent the 1/4 sub-pixel values to be interpolated and $A_x$-$H_x$ represent the original full-pl pixel values.

After completing the horizontal filtering, the calculated values are downshifted. This is illustrated in the following equation, by way of example, for the intermediate value of $h_1$:

$$h_1' = \left( h_1 + \frac{64}{2} \right) >> 6,$$

$h_1$ represents the interpolated pixel value resulting from horizontal filtering and $h_1'$ represents the respectively downshifted pixel value. A corresponding processing is applied to all of the interpolated pixel values resulting from horizontal filtering.

In a second step of the first stage, the horizontally increased sub-pixel accuracy is also obtained in vertical direction. For this purpose, a vertical filtering is applied. The previously performed downshift operation provides that none of the intermediate calculations exceeds a 16-bit accuracy in the vertical filtering step. The vertical filtering is performed by employing the filter coefficients as shown in the following equations which correspond to those of the horizontal filtering:

$$v_1 = -1 \cdot D_{v-3} + 3 \cdot D_{v-2} - 10 \cdot D_{v-1} + 59 \cdot D_v + 18 \cdot D_{v+1} - 6 \cdot D_{v+2} + 1 \cdot D_{v+3} - 0 \cdot D_{v+4},$$

$$v_2 = -1 \cdot D_{v-3} + 4 \cdot D_{v-2} - 10 \cdot D_{v-1} + 39 \cdot D_v + 39 \cdot D_{v+1} - 10 \cdot D_{v+2} + 4 \cdot D_{v+3} - 1 \cdot D_{v+4},$$

$$v_3 = -0 \cdot D_{v-3} + 1 \cdot D_{v-2} - 6 \cdot D_{v-1} + 18 \cdot D_v + 59 \cdot D_{v+1} - 10 \cdot D_{v+2} + 3 \cdot D_{v+3} - 1 \cdot D_{v+4}$$

$v_{1-3}$ refer to the vertical 1/4 sub-pixel values and $D_{v-3}$, $D_{v-2}$, $D_{v-1}$, $D_v$, $D_{v+1}$, $D_{v+2}$, $D_{v+3}$ and $D_{v+4}$ represent the full-pel pixel positions in vertical direction, i.e. pixels 210 and 220 from Fig. 3.

The calculation results from the vertical filtering, namely, pixel values 230, are subjected to downshifting by applying the following equation which is illustrated, by way of example to $v_1$ only:

$$v_1' = \left(v_1 + \frac{64}{2}\right) >> 6$$

A rounding during the downshift operation is achieved by adding the value $2^6/2 = 64/2$ to the interpolated pixel value.

Although, the above description first applies a horizontal filtering and a vertical filtering together with respective downshift operations, the skilled person is aware that the horizontal and vertical operations may be exchanged to achieve the same result. Thus, the vertical filtering may be performed before a horizontal filtering is applied.

The finally obtained sub-pixel values of a 1/4 sub-pixel accuracy are clipped in order to be in a range between 0 and 255.

The obtained 1/4 sub-pixel values are subjected to a bilinear filtering as it has been described above in connection with Fig. 5 and Fig. 6 in order to obtain a 1/8 sub-pixel resolution.

The following example demonstrates that the processing of the present invention does not require any registers for intermediate pixel values exceeding a 16-bit accuracy.

Assuming a pixel value range between 0 and 255, the largest possible values during a horizontal 8-tap filtering may occur when employing the equation for calculating intermediate pixel value $h_2$:

$$h2 = -1 \cdot 0 + 4 \cdot 255 + (-10) \cdot 0 + 39 \cdot 255 + 39 \cdot 255 + (-10) \cdot 0 + 4 \cdot 255 + (-1) \cdot 0$$

$$h2 = 21930 < 32768 = 2^{15} \Rightarrow 15bit + 1bit(sign)$$

The resulting pixel value is downshifted as indicated by the following equation:

$$\left(21930 + \tfrac{64}{2}\right) >> 6 = 343$$

The result of the downshift operation is clipped to the range of 0 to 255.

As demonstrated above, the required pixel accuracy for the largest possible values during the filtering operation does not exceed 16-bits. Although the above example has only been calculated for the horizontal direction, corresponding coefficients are used for the vertical filtering and, thus, identical advantages are achieved.

The above example only relates to the 1/4 sub-pixel resolution calculation. The bilinear filtering for generating a 1/8 sub-pixel resolution only requires a maximum accuracy of 10-bits. Thus, a maximum accuracy of 16-bits is sufficient for performing all calculations of the present invention. Accordingly, the motion estimation and compensation and the encoding and decoding of video data can be improved in a simple manner.

For demonstrating that similar results compared to conventional interpolation implementations can be achieved when applying the present invention, the algorithm of the present invention has been implemented into the H.264/MPEG encoder processing software (JM42). The calculation results are illustrated in Fig. 7 and Fig. 8 by rate distortion curves with indicate the impact on the perceived picture quality. Both figures only differ by the example image sequence employed.

The rate distortion curves of Fig. 7 and Fig. 8 are shown over the bit rate on the x-axis and the peak signal to noise ratio (PSNR) on the y-axis representing a measure for the introduced distortions.

Fig. 7 and Fig. 8 demonstrate that the 16-bit implementation of a 1/8 sub-pixel filter (1/8-pel 16 bit) does not result in an image quality degradation compared to the JM4.2 algorithm (1/8-pel 25-bit) although the JM4.2 algorithm requires longer registers. In addition, the approach of the present invention actually performs better than an 1/4 sub-pixel 20-bit encoder (1/4-pel 20 bit).

Summarizing, the present invention provides an improved motion estimation and compensation by only employing a simplified hardware configuration and less computational effort. This is achieved by particular filter coefficients and additional downshift operations when calculating a 1/4 sub-pixel resolution image. Accordingly, a more efficient encoding and decoding with a more simple hardware configuration can be achieved.

**Claims**

1. A method for estimating or compensating motion between images of a sequence of video images, said method including a step of interpolating pixel values, said interpolation step comprising the steps of:

   calculating intermediate pixel values (220, 230) of a 1/4 pixel resolution, and
   bilinear filtering the pixel values of said 1/4 pixel resolution for determining additional pixel values (A) in-between to obtain pixel values of a 1/8 pixel resolution
   **characterized in that** the calculation of intermediate pixel values of said 1/4 pixel resolution includes
   a first filtering step in a first direction for calculating intermediate pixel values (220) based on pixel values (210) of a current image in accordance with the following equations:

$$h_1 = -1 \cdot A_h + 3 \cdot B_h - 10 \cdot C_h + 59 \cdot D_h + 18 \cdot E_h - 6 \cdot F_h + 1 \cdot G_h - 0 \cdot H_h,$$

$$h_2 = -1 \cdot A_h + 4 \cdot B_h - 10 \cdot C_h + 39 \cdot D_h + 39 \cdot E_h - 10 \cdot F_h + 4 \cdot G_h - 1 \cdot H_h,$$

$$h_3 = -0 \cdot A_h + 1 \cdot B_h - 6 \cdot C_h + 18 \cdot D_h + 59 \cdot E_h - 10 \cdot F_h + 3 \cdot G_h - 1 \cdot H_h$$

   wherein $A_h, B_h, C_h, D_h, E_h, F_h, G_h$ and $H_h$ represent neighboring pixel values (210) of the current image in said first direction of pixels and $h_1, h_2,$ and $h_3$ represent the intermediate pixel values (220) calculated between two of said neighbouring pixel values (210) of the current image,
   a first shifting step for downshifting the binary representation of said calculated intermediate pixel values (220) by six bits,
   a second filtering step in a second direction for calculating intermediate pixel values (230) based on pixel values obtained from said first filtering step and said first shifting step in accordance with the following equations:

$$v_1 = -1 \cdot D_{v-3} + 3 \cdot D_{v-2} - 10 \cdot D_{v-1} + 59 \cdot D_v + 18 \cdot D_{v+1} - 6 \cdot D_{v+2} + 1 \cdot D_{v+3} - 0 \cdot D_{v+4},$$

$$v_2 = -1 \cdot D_{v-3} + 4 \cdot D_{v-2} - 10 \cdot D_{v-1} + 39 \cdot D_v + 39 \cdot D_{v+1} - 10 \cdot D_{v+2} + 4 \cdot D_{v+3} - 1 \cdot D_{v+4},$$

$$v_3 = -0 \cdot D_{v-3} + 1 \cdot D_{v-2} - 6 \cdot D_{v-1} + 18 \cdot D_v + 59 \cdot D_{v+1} - 10 \cdot D_{v+2} + 3 \cdot D_{v+3} - 1 \cdot D_{v+4}$$

   wherein $D_{v-3}, D_{v-2}, D_{v-1}, D_v, D_{v+1}, D_{v+2}, D_{v+3}$ and $D_{v+4}$ represent neighboring pixel values in said second direction of pixels and $v_1, v_2,$ and $v_3$ represent the intermediate pixel values (230) calculated between two of said neighbouring pixel values, and
   a second shifting step for downshifting the binary representation of said intermediate pixel values (230) calculated in said second filtering step by six bits.

2. A method according to claim 1, wherein said first and said second directions of pixels are the horizontal and vertical direction.

3. A method according to claim 1 or 2, further comprising the step of clipping each calculated intermediate pixel value to a predefined range of allowable pixel values after said first and/or second shifting step.

4. A method according to claim 3, wherein the pixels of the image have a resolution of 3 bits and an allowable pixel value range from 0 to 255.

5. A method according to any of claims 1 to 4, wherein said bilinear filtering step calculating intermediate pixel values (A) by applying a mean value calculation.

6. A method according to any of claims 1 to 5, wherein said bilinear filtering is applied in horizontal and vertical direction.

7. A method according to any of claims 1 to 5, wherein said bilinear filtering is applied in diagonal directions.

8. A method according to claim 7, wherein said bilinear filtering is based on pixel values (E, F, H, I) which are directly derived from the pixel values (210) of the original image.

9. A method according to claim 8, wherein said bilinear filtering is additionally based on the centre pixel value (240) between four pixel values (210) of the original image.

10. A method according to any of claims 7 to 9, wherein said bilinear filtering applying the following equations depending on the two pixel values (E, F; H, I) to be taken into account:

$$D = \left(E + F + 1\right) >> 1,$$

$$G = \left(3H + I + 2\right) >> 2$$

wherein $D$ and $G$ represent said bilinear filtered pixel values, $E, F, H$ and $I$ represent pixel values taken into account for said bilinear filtering, and >> represents a binary downshift operation.

11. A method for encoding a sequence of video images employing motion estimation in accordance with any of claims 1 to 10.

12. A method for decoding a sequence of encoded video images employing motion compensation in accordance with any of claims 1 to 10.

13. A method for decoding a sequence of encoded video images, the decoding method including the step of calculating image data of a 1/8 sub-pixel resolution wherein the image data of a 1/8 sub-pixel resolution is calculated in accordance with the method of any of claims 1 to 10.

14. A motion estimator or compensator for estimating or compensating motion between images of a sequence of video images, said motion estimator including a pixel interpolator for interpolating pixel values in a video image, comprising:

a calculator for calculating intermediate pixel values (220, 230) of a 1/4 pixel resolution, and
a bilinear filter for filtering the pixel values of said 1/4 pixel resolution for determining additional pixel values (A) in-between to obtain pixel values of a 1/8 pixel resolution
**characterized in that** said calculator for the 1/4 pixel resolution includes
a first filter for calculating intermediate pixel values (220) based on pixel values (210) of a current image in a first direction in accordance with the following equations:

$$h_1 = -1 \cdot A_h + 3 \cdot B_h - 10 \cdot C_h + 59 \cdot D_h + 18 \cdot E_h - 6 \cdot F_h + 1 \cdot G_h - 0 \cdot H_h,$$

$$h_2 = -1 \cdot A_h + 4 \cdot B_h - 10 \cdot C_h + 39 \cdot D_h + 39 \cdot E_h - 10 \cdot F_h + 4 \cdot G_h - 1 \cdot H_h,$$

$$h_3 = -0 \cdot A_h + 1 \cdot B_h - 6 \cdot C_h + 18 \cdot D_h + 59 \cdot E_h - 10 \cdot F_h + 3 \cdot G_h - 1 \cdot H_h$$

wherein $A_h$, $B_h$, $C_h$, $D_h$, $E_h$, $F_h$, $G_h$ and $H_h$ represent neighboring pixel values (210) of the current image in said first direction of pixels and $h_1$, $h_2$, and $h_3$ represent the intermediate pixel values (220) calculated between two of said neighbouring pixel values (210) of the current image,

a first shifting unit for downshifting the binary representation of the pixel values (220) from said first filter by six bits,

a second filter for calculating intermediate pixel values (230) based on pixel values obtained from said first filter and said first shifting means in a second direction in accordance with the following equations:

$$v_1 = -1 \cdot D_{v\text{-}3} + 3 \cdot D_{v\text{-}2} - 10 \cdot D_{v\text{-}1} + 59 \cdot D_v + 18 \cdot D_{v+1} - 6 \cdot D_{v+2} + 1 \cdot D_{v+3} - 0 \cdot D_{v+4},$$

$$v_2 = -1 \cdot D_{v\text{-}3} + 4 \cdot D_{v\text{-}2} - 10 \cdot D_{v\text{-}1} + 39 \cdot D_v + 39 \cdot D_{v+1} - 10 \cdot D_{v+2} + 4 \cdot D_{v+3} - 1 \cdot D_{v+4},$$

$$v_3 = -0 \cdot D_{v\text{-}3} + 1 \cdot D_{v\text{-}2} - 6 \cdot D_{v\text{-}1} + 18 \cdot D_v + 59 \cdot D_{v+1} - 10 \cdot D_{v+2} + 3 \cdot D_{v+3} - 1 \cdot D_{v+4}$$

wherein $D_{v\text{-}3}$, $D_{v\text{-}2}$, $D_{v\text{-}1}$, $D_v$, $D_{v+1}$, $D_{v+2}$, $D_{v+3}$ and $D_{v+4}$ represent neighboring pixel values in said second direction of pixels and $v_1$, $v_2$, and $v_3$ represent the intermediate pixel values (230) calculated between two of said neighbouring pixel values, and

a second shifting unit for downshifting the binary representation of said intermediate pixel values (230) from said second filter by six bits.

15. A pixel interpolator according to claim 14, wherein said first and said second directions of pixels are the horizontal and vertical direction.

16. A motion estimator or compensator according to claim 14 or 15, further comprising clipping means for clipping the pixel values from said first and said second shifting means to a predefined range of allowable pixel values.

17. A motion estimator or compensator according to claim 16, wherein the pixels of the image have a resolution of 3 bits and an allowable pixel value range from 0 to 255.

18. A motion estimator or compensator according to any of claims 14 to 17, wherein said bilinear filter comprising a mean value calculator for calculating intermediate pixel values (A).

19. A motion estimator or compensator according to any of claims 14 to 18, wherein said bilinear filter filtering pixels in horizontal and vertical direction.

20. A motion estimator or compensator according to any of claims 14 to 19, wherein said bilinear filter filtering pixels in diagonal directions.

21. A motion estimator or compensator according to claim 20, wherein said bilinear filter filtering pixel values (E, F, H, I) which are directly derived from said pixel values (210) of said original image.

22. A motion estimator or compensator according to claim 21, wherein said bilinear filter additionally taking the centre pixel value (240) between four pixel values (210) of the original image into account.

23. A motion estimator or compensator according to any of claims 20 to 22, wherein said bilinear filter applying the following equations depending on the two pixel values (E, F; H, I) to be taken into account:

$$D = \left( E + F + 1 \right) >> 1,$$

$$G = \left(3H + I + 2\right) >> 2$$

wherein *D* and *G* represent said bilinear filtered pixel values, *E, F, H* and *I* represent pixel values taken into account for said bilinear filtering, and >> represents a binary downshift operation.

**24.** An encoder for encoding a sequence of video images comprising a motion estimator in accordance with any of claims 14 to 23.

**25.** A decoder for decoding a sequence of encoded video images employing a motion compensator in accordance with any of claims 14 to 23.

Fig. 1

0 ———————————————————————————————————————→ x

| | B(0,0) | B(1,0) | B(2,0) | B(3,0) | B(4,0) | B(5,0) | B(6,0) | B(7,0) | | $B(x_{max}-1,0)$ |
|---|---|---|---|---|---|---|---|---|---|---|
| | B(0,1) | B(1,1) | B(2,1) | B(3,1) | B(4,1) | B(5,1) | B(6,1) | B(7,1) | | |
| | B(0,2) | B(1,2) | B(2,2) | B(3,2) | B(4,2) | B(5,2) | B(6,2) | B(7,2) | | |
| | B(0,3) | B(1,3) | B(2,3) | B(3,3) | B(4,3) | B(5,3) | B(6,3) | B(7,3) | | |
| | B(0,4) | B(1,4) | B(2,4) | B(3,4) | B(4,4) | B(5,4) | B(6,4) | B(7,4) | | |
| | B(0,5) | B(1,5) | B(2,5) | B(3,5) | B(4,5) | B(5,5) | B(6,5) | B(7,5) | | |
| | B(0,6) | B(1,6) | B(2,6) | B(3,6) | B(4,6) | B(5,6) | B(6,6) | B(7,6) | | |
| $B(0, y_{max}-1)$ | | | | | | | | | | $B(x_{max}-1, y_{max}-1)$ |

# Fig. 2

# Fig. 3

# Fig. 4

# Fig. 5

# Fig. 6

Fig. 7

Fig. 8

**European Patent Office**

## EUROPEAN SEARCH REPORT

Application Number

EP 04 01 6437

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "H.26L TEST MODEL LONG TERM NUMBER 8 (TML-8) DRAFT0"<br>ITU-T TELECOMMUNICATION STANDARIZATION SECTOR OF ITU, GENEVA, CH,<br>2 April 2001 (2001-04-02), pages 1-54,<br>XP001089814<br>* paragraph [3.7.1.2. 1/8 pixel accuracy] * | 1-25 | H04N7/26 |
| X | ALVAREZ J R: "Discrepancies in Documentation and Implementation of Sub-pel interpolation in TML-8 (Draft 0), VCEG-N71"<br>ITU - TELECOMMUNICATIONS STANDARDIZATION SECTOR, STUDY GROUP 16 QUESTION 6, VIDEO CODING EXPERTS GROUP VCEG,<br>24 September 2001 (2001-09-24),<br>XP002301983<br>* paragraph [3. Eighth-pel Interpolation] * | 1-25 | |
| | ----- | | **TECHNICAL FIELDS SEARCHED (Int.Cl.7)** |
| A | WEDI T: "Results of core experiment on Adaptive Motion Accuracy (AMA) with 1/2, 1/4 and 1/8-pel accuracy"<br>ITU - TELECOMMUNICATIONS STANDARDIZATION SECTOR, STUDY GROUP 16, VIDEO CODING EXPERTS GROUP QUESTION 15, DOCUMENT Q15J15, 16 May 2000 (2000-05-16),<br>XP002301984<br>* paragraph [2.1 Interpolation Process ] *<br>* paragraph [2.2 Interpolation Filters ] *<br>----- | 1-25 | H04N<br>H03H |

The present search report has been drawn up for all claims

| Place of search | Date of completion of the search | Examiner |
|---|---|---|
| The Hague | 7 December 2004 | Wahrenberg, A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)